# FASCICULE DE BREVET EUROPEEN

(11) **EP 4 616 507 B1**
(45) Date de publication et mention de la délivrance du brevet: **02.09.2026**
(21) Numéro de dépôt: 23798965.2
(22) Date de dépôt: 06.11.2023
(51) Int. Cl.: H02J 1/10, H02J 7/00, H02J 7/14

(54) **SYSTEME ELECTRIQUE D' ALIMENTATION POUR VEHICULE**
STROMVERSORGUNGSSYSTEM FÜR FAHRZEUGE
ELECTRICAL SUPPLY SYSTEM FOR VEHICLES

(30) Priorité: 09.11.2022 FR 2211693
(43) Date de publication de la demande: 17.09.2025
(73) Titulaire: Commissariat à l'Energie Atomique et aux Energies Alternatives, 75015 Paris (FR); Schaeffler Technologies AG & Co. KG, 91074 Herzogenaurach (DE)
(72) Inventeur: BACQUET, Sylvain, 38054 Grenoble cedex 09 (FR); DESPESSE, Ghislain, 38054 Grenoble cedex 09 (FR); VERDIER, Damien, 31100 TOULOUSE (FR); LACHAIZE, Jérôme, 31100 TOULOUSE (FR); LETO, Nicolas, 31100 TOULOUSE (FR)
(74) Mandataire: INNOV-GROUP
(86) Numéro de dépôt international: PCT/EP2023/080750
(87) Numéro de publication internationale: WO 2024/099917

(56) Documents cités:
- FR-A1- 3 078 454
- US-A1- 2010 315 043
- US-A1- 2022 219 549

## Description

### [Domaine technique]

L'invention concerne le domaine des véhicules hybrides ou électriques, et plus précisément un système électrique d'alimentation pour véhicule hybride ou électrique.

### [Etat de la technique antérieure]

De manière connue, un véhicule électrique ou hybride comprend une machine électrique de propulsion du véhicule, ainsi qu'une batterie de stockage apte à être reliée à la machine électrique. Un onduleur est connecté entre la batterie et la machine électrique et permet de convertir la tension continue fournie par la batterie en une tension alternative, notamment triphasée, afin d'alimenter chaque phase de la machine électrique.

Le véhicule comprend également un réseau auxiliaire d'alimentation électrique interne permettant d'alimenter les équipements électriques du véhicule (par exemple les essuie-glaces, les phares, les voyants lumineux du tableau de bord etc).

La tension fournie par le réseau auxiliaire est par exemple de 12 ou 14 V.

Le véhicule comprend également une batterie auxiliaire apte à alimenter le réseau et un convertisseur de tension continue-continue connecté entre la batterie auxiliaire et la batterie, afin de recharger la batterie auxiliaire.

Cela présente l'inconvénient de devoir monter et paramétrer de nombreux convertisseurs dans le véhicule.

De plus, chaque batterie est en réalité constituée d'un ensemble de cellules de batterie reliées entre elles de manière statique. Le niveau de charge de chaque batterie dépend de l'état de charge de chaque cellule. Cependant, les cellules peuvent ne pas avoir toutes des caractéristiques électriques et énergétiques identiques. Le dimensionnement de chaque batterie doit donc prendre en considération les phénomènes de vieillissement et des performances de chaque cellule, ce qui est contraignant.

Par ailleurs, le dimensionnement des composants du convertisseur et de l'onduleur est réalisé pour que la tension fournie par le convertisseur et l'onduleur soient définies chacune sur une large gamme de tensions. Ainsi, puisque le dimensionnement de chacun de ces éléments n'est pas réalisé pour une tension de fonctionnement optimale, cela peut provoquer des pertes après chaque conversion mise en œuvre par le convertisseur ou l'onduleur. Des exemples de systèmes d'alimentation de véhicules peuvent être trouvés dans le document US2022/219549.

Il existe donc le besoin d'une solution permettant de pallier, au moins en partie, les inconvénients décrits précédemment.

### [Exposé de l'invention]

A cette fin, l'invention concerne un système d'alimentation électrique pour véhicule électrique ou hybride, le véhicule comprenant un bus d'alimentation électrique apte à alimenter des équipements électriques montés dans le véhicule, ledit système comprenant :
a) au moins deux cellules d'alimentation comprenant chacune :
   i) un transformateur bidirectionnel, apte à fournir une tension alternative à partir d'une tension continue et inversement,
   ii) une première batterie apte à fonctionner selon un mode de décharge, dans lequel la première batterie est apte à fournir une première tension continue et apte à fonctionner selon un mode de charge dans lequel la batterie est apte à se recharger à partir d'une tension continue,
   iii) une deuxième batterie apte à fonctionner selon un mode de décharge, dans lequel la première batterie est apte à fournir une première tension continue et apte à fonctionner selon un mode de charge dans lequel la batterie est apte à se recharger à partir d'une tension continue,
   iv) une cellule de commutation comprenant des interrupteurs aptes à connecter la première batterie et/ou la deuxième batterie au transformateur,
b) un premier commutateur apte à connecter la première batterie de chaque cellule d'alimentation au bus d'alimentation électrique,
c) un deuxième commutateur apte à connecter la deuxième batterie au bus d'alimentation électrique,
d) un module de connexion apte à connecter électriquement chaque cellule d'alimentation à un réseau d'alimentation électrique, apte à fournir une tension alternative, ou à un équipement électrique externe au véhicule, apte à être alimenté à partir d'une tension alternative :
   i) si la tension alternative fournie par le réseau d'alimentation, ou si la tension nécessaire pour alimenter l'équipement électrique, est monophasée, le module de connexion est apte à connecter la tension monophasée à au moins une cellule d'alimentation,
   ii) si la tension alternative fournie par le réseau d'alimentation, ou si la tension nécessaire pour alimenter l'équipement électrique, est triphasée, le module de connexion est apte à connecter chaque phase de ladite tension à une cellule d'alimentation qui lui est propre,
e) une unité de contrôle configurée pour commander le module de connexion, le premier commutateur et le deuxième commutateur,
le système électrique est apte à fonctionner selon une pluralité de modes de fonctionnement :
i) un premier mode de fonctionnement dans lequel le module de connexion connecte chaque phase de la tension triphasée fournie par le réseau d'alimentation à une cellule d'alimentation qui lui est propre et, pour chaque cellule d'alimentation :
   1) la première batterie ou la deuxième batterie est connectée au bus d'alimentation,
   2) la batterie non connectée au bus d'alimentation est connectée au module de connexion et fonctionne selon le mode de charge ou de décharge,
ii) un deuxième mode de fonctionnement dans lequel le module de connexion connecte la tension monophasée fournie par le réseau d'alimentation à au moins une cellule d'alimentation et, pour chaque cellule d'alimentation connectée à la tension monophasée :
   1) la première batterie ou la deuxième batterie est connectée au bus d'alimentation,
   2) la batterie non connectée au bus d'alimentation est connectée au module de connexion et fonctionne selon le mode de charge ou de décharge.

De préférence, si la tension alternative fournie par le réseau d'alimentation, ou si la tension nécessaire pour alimenter l'équipement électrique, est monophasée, le module de connexion est apte à connecter la tension monophasée à chacune des cellules d'alimentation. Ainsi, lorsque le système électrique fonctionne selon le deuxième mode de fonctionnement, le module de connexion connecte la tension monophasée à toutes les cellules d'alimentation.

Ainsi, le système d'alimentation permet d'alimenter le bus d'alimentation du véhicule tout en alimentant des équipements externes au véhicule ou permet encore d'alimenter le bus d'alimentation du véhicule grâce à une première batterie tout en permettant à la deuxième batterie de se recharger à partir d'une tension fournie par un réseau d'alimentation électrique externe au véhicule. Par ailleurs, le système d'alimentation peut également permettre d'alimenter le bus d'alimentation de manière alternative à partir d'une première batterie ou d'une deuxième batterie, de sorte à équilibrer l'état de charge entre chaque première et deuxième batterie. De plus, le système d'alimentation est fonctionnel que la tension alternative fournie par le réseau soit monophasée ou triphasée ou que la tension alternative à fournir afin d'alimenter un équipement électrique externe soit monophasée ou triphasée.

Le transformateur comprend avantageusement une isolation galvanique.

Les transformateurs sont bidirectionnels en courant.

De manière avantageuse, l'ensemble des premières batteries de chaque cellule d'alimentation est relié en série, et l'ensemble des deuxièmes batteries de chaque cellule d'alimentation est relié en série.

De préférence, le système d'alimentation est configuré pour fonctionner selon :
i) un troisième mode de fonctionnement dans lequel :
   1) le module de connexion connecte la tension monophasée à au moins une cellule d'alimentation,
   2) chaque interrupteur de chaque cellule d'alimentation connectée à la tension monophasée est fermé,
   3) le premier commutateur et le deuxième commutateur sont ouverts, de sorte que chaque batterie fonctionne selon le mode de charge ou selon le mode de décharge,
ii) un quatrième mode de fonctionnement dans lequel
   1) le module de connexion étant apte à connecter chaque phase de ladite tension à une cellule d'alimentation qui lui est propre,
   2) chaque interrupteur de chaque cellule d'alimentation est fermé,
   3) le premier commutateur et le deuxième commutateur sont ouverts, de sorte que chaque batterie fonctionne selon le mode de charge ou selon le mode de décharge.

Ainsi, le système d'alimentation permet également d'utiliser l'ensemble des premières et deuxièmes batteries afin d'alimenter des équipements externes au véhicule ou de permettre aux première et deuxième batteries de se recharger à partir d'une tension fournie par un réseau d'alimentation électrique externe au véhicule. De plus, le système d'alimentation rend cela possible que la tension alternative fournie par le réseau soit monophasée ou triphasée ou que la tension alternative à fournir afin d'alimenter un équipement électrique externe soit monophasée ou triphasée.

De préférence encore, le système d'alimentation est configuré pour fonctionner selon un cinquième mode de fonctionnement dans lequel le premier commutateur et le deuxième commutateur sont fermés, chaque interrupteur de chaque cellule d'alimentation étant ouvert, de sorte que la première batterie et la deuxième batterie alimentent le bus de d'alimentation en énergie électrique.

Ainsi, le système d'alimentation permet également d'utiliser l'ensemble des premières et deuxièmes batteries afin d'alimenter le bus d'alimentation en énergie électrique.

De préférence encore, le module de connexion comprend :
a) une première borne de connexion reliée électriquement à la première cellule d'alimentation,
b) une deuxième borne de connexion,
c) une troisième borne de connexion,
d) un premier interrupteur, apte à relier la deuxième cellule d'alimentation à la première borne de connexion ou à la deuxième borne de connexion,
e) un deuxième interrupteur apte à connecter la troisième cellule d'alimentation à la première borne de connexion ou à la troisième borne de connexion.

Avantageusement encore :
a) la première borne de connexion est reliée électriquement au transformateur de la première cellule d'alimentation,
b) le premier interrupteur est apte à relier le transformateur de la deuxième cellule d'alimentation à la première borne de connexion ou à la deuxième borne de connexion,
c) le deuxième interrupteur est apte à relier le transformateur de la troisième cellule d'alimentation à la première borne de connexion ou à la troisième borne de connexion.

De préférence encore :
a) lorsque le système fonctionne selon le premier mode de fonctionnement, le premier interrupteur du module de connexion connecte la deuxième borne de connexion à la deuxième cellule d'alimentation et le deuxième interrupteur du module de connexion connecte la troisième borne de connexion à la troisième cellule d'alimentation,
b) lorsque le système fonctionne selon le deuxième mode de fonctionnement :
   - le premier interrupteur connecte la première borne de connexion à la deuxième cellule d'alimentation et le deuxième interrupteur connecte la première borne de connexion à la troisième cellule d'alimentation, lorsque toutes les cellules d'alimentation sont connectées au module de connexion,
   - le premier interrupteur du module de connexion connecte la deuxième borne de connexion à la deuxième cellule d'alimentation et le deuxième interrupteur du module de connexion connecte la troisième borne de connexion à la troisième cellule d'alimentation lorsqu'une seule cellule d'alimentation est connectée au module de connexion.

Avantageusement, le système électrique comprend trois cellules d'alimentation.

L'invention concerne également un véhicule automobile comprenant un bus d'alimentation électrique apte à alimenter des équipements électriques montés dans le véhicule et un système d'alimentation électrique tel que présenté précédemment.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La **figure** 1 est un schéma représentant le système d'alimentation selon l'invention.
[Fig 2] La **figure 2** est un schéma représentant le premier mode de fonctionnement du système d'alimentation selon l'invention.
[Fig 3] La **figure 3** est un schéma représentant le deuxième mode de fonctionnement du système d'alimentation selon l'invention.
[Fig 4] La **figure 4** est un schéma représentant le troisième mode de fonctionnement du système d'alimentation selon l'invention.
[Fig 5] La **figure** 5 est un schéma représentant le quatrième mode de fonctionnement du système d'alimentation selon l'invention.
[Fig 6] La **figure 6** est un schéma représentant le cinquième mode de fonctionnement du système d'alimentation selon l'invention.

### [Description des modes de réalisation]

### Véhicule

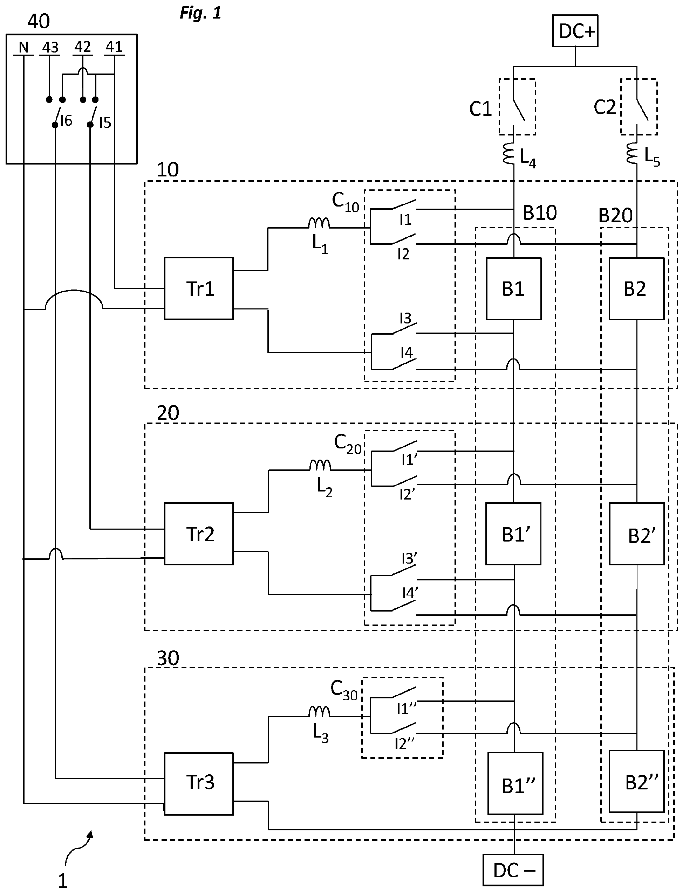

En référence à la figure 1, il va maintenant être décrit un véhicule selon l'invention. Le véhicule comprend notamment un bus d'alimentation DC électrique comprenant une borne positive DC+ et une borne négative DC-. Le bus d'alimentation électrique est embarqué dans le véhicule et est apte à fournir de l'énergie électrique à divers équipements électriques embarqués dans le véhicule. Le bus d'alimentation est communément appelé « réseau de bord » par l'homme du métier.

Le véhicule comprend également un système d'alimentation 1 électrique.

### Système d'alimentation

En référence à la figure 1, le système d'alimentation 1 comprend au moins deux cellules d'alimentation 10, 20, 30, un module de connexion 40, un premier commutateur C1, un deuxième commutateur C2 et une unité de contrôle (non représentée sur les figures).

De préférence, le système d'alimentation 1 comprend une première cellule d'alimentation 10, une deuxième cellule d'alimentation 20 et une troisième cellule d'alimentation 30. Chaque cellule d'alimentation 10, 20, 30 est apte à convertir une tension alternative en une tension continue.

### Cellule d'alimentation 10, 20, 30

Chaque cellule d'alimentation 10, 20, 30, comprend un transformateur Tr1, Tr2, Tr3, une première batterie B1, B1', B1", une deuxième batterie B2, B2', B2" et une cellule de commutation C₁₀, C₂₀, C₃₀.

Plus précisément, le transformateur Tr1, Tr2, Tr3 de chaque cellule d'alimentation 10, 20, 30 est dit bidirectionnel. Autrement dit, chaque transformateur Tr1, Tr2, Tr3 est apte à fournir une tension alternative à partir d'une tension continue et inversement.

Chaque transformateur Tr1, Tr2, Tr3 comprend deux bornes d'entrée et deux bornes de sortie.

La première batterie B1, B1', B1" est apte à fonctionner selon un mode de décharge, dans lequel la première batterie B1, B1', B1"est apte à fournir une première tension continue. Par ailleurs, la première batterie B1, B1', B1" de chaque cellule d'alimentation 10, 20, 30 est également apte à fonctionner selon un mode de charge dans laquelle la première batterie B1, B1', B1" reçoit de l'énergie électrique.

De même, la deuxième batterie B2, B2', B2" de chaque cellule d'alimentation 10, 20, 30 apte à fonctionner selon un mode de décharge, dans lequel la deuxième batterie B2, B2', B2" est apte à fournir une deuxième tension continue. Par ailleurs, la deuxième batterie B2, B2', B2" de chaque cellule d'alimentation 10, 20, 30 est également apte à fonctionner selon un mode de charge dans laquelle la deuxième batterie B2, B2', B2" reçoit de l'énergie électrique.

Chaque première batterie B1, B1', B1" et chaque deuxième batterie B2, B2', B2" comprend deux bornes de connexion.

La cellule de commutation C₁₀, C₂₀, C₃₀ de chaque cellule d'alimentation 10, 20, 30 est apte à connecter la première batterie B1, B1', B1" et/ou la deuxième batterie B2, B2', B2" au transformateur Tr1, Tr2, Tr3.

Plus précisément, deux cellules de commutation C₁₀, C₂₀ comprennent un premier interrupteur 11, I1', I1", un deuxième interrupteur I2, I2', I2", un troisième interrupteur I3, I3' et un quatrième interrupteur I4, I4'.

Le premier interrupteur I1, I1' de chaque cellule d'alimentation 10, 20, 30 permet de connecter une première borne de la première batterie B1, B1', à la première borne de sortie du transformateur Tr1, Tr2, propre à ladite cellule d'alimentation 10, 20.

Le deuxième interrupteur I2, I2' de chaque cellule d'alimentation 10, 20, 30 permet de connecter une première borne de la deuxième batterie B2, B2', à la première borne de sortie du transformateur Tr1, Tr2 propre à ladite cellule d'alimentation 10, 20.

Le troisième interrupteur I3, I3' de chaque cellule d'alimentation 10, 20 permet de connecter la deuxième borne de la première batterie B1, B1' à la deuxième borne de sortie du transformateur Tr1, Tr2, propre à ladite cellule d'alimentation 10, 20.

Le quatrième interrupteur I4, I4' de chaque cellule d'alimentation 10, 20 permet de connecter la deuxième borne de la deuxième batterie B2, B2' à la deuxième borne de sortie du transformateur Tr1, Tr2, propre à ladite cellule d'alimentation 10, 20.

La troisième cellule de commutation C₃₀ comprend un premier interrupteur I1" et un deuxième interrupteur I2". Le premier interrupteur I1" permet de connecter une première borne de la première B1" à la première borne de sortie du transformateur Tr3 propre à ladite cellule d'alimentation 30. Le deuxième interrupteur I2" permet de connecter une première borne de la deuxième batterie B2", à la première borne de sortie du transformateur Tr3 propre à ladite cellule d'alimentation 30.

La deuxième borne de la première et de la deuxième batterie B1" et B2" de la troisième cellule d'alimentation 30 sont reliées à un point bas. Le point bas est notamment connecté à la borne négative DC- du bus d'alimentation DC.

De plus, les premières batteries B1, B1', B1", respectivement les deuxièmes batteries B2, B2', B2" sont reliées en série. Autrement dit, la deuxième borne de la première batterie B1 est reliée à la première borne de la première batterie B1' et la deuxième borne de la première batterie B1' est reliée à la première borne de la première batterie B1". Par analogie, la deuxième borne de la deuxième batterie B2 est reliée à la première borne de la deuxième batterie B2' et la deuxième borne de la deuxième batterie B2' est reliée à la première borne de la deuxième batterie B2".

Les premières batteries B1, B1', B1" ainsi reliées constituent une première branche B10 et les deuxièmes batteries B2, B2', B2" ainsi reliées constituent une deuxième branche B20.

De plus, chaque cellule de commutation C₁₀, C₂₀, C₃₀, comprend une bobine L1, L2, L3, connectée d'une part au premier interrupteur I1, I1', I1" et au deuxième interrupteur I2, I2', I2" propres à ladite cellule de commutation C₁₀, C₂₀, C₃₀ et connectée d'autre part au transformateur Tr1, Tr2, Tr3 propre à ladite cellule de commutation C₁₀, C₂₀, C₃₀. Les bobines L1, L2, L3 permettent de contrôler le courant en régulant la tension aux bornes de chaque première batterie B1, B1', B1" et deuxième batterie B2, B2', B2".

Le premier commutateur C1 est apte à connecter une des premières batteries B1, B1', B1", plus précisément la première batterie B1, au bus d'alimentation électrique. Autrement dit, le premier commutateur C1 permet de connecter la première branche B10 au bus d'alimentation électrique DC+.

Le deuxième commutateur C2 est apte à connecter une des deuxièmes batteries B2, B2', B2", plus précisément la deuxième batterie B2, au bus d'alimentation électrique. Autrement dit, le deuxième commutateur C2 permet de connecter la deuxième branche B20 au bus d'alimentation électrique DC+.

De plus, le système d'alimentation 1 peut comprend une quatrième bobine L4 permettant de relier le premier commutateur C1 à la première batterie B1 et une cinquième bobine L5 permettant de relier le deuxième commutateur C2 à la deuxième batterie B2. La quatrième bobine L4 et la cinquième bobine L5 permettent de réguler la tension continue qui circulent à leurs bornes.

### Module de connexion 40

Le module de connexion 40 est apte à être connecté d'une part à un réseau d'alimentation électrique alternatif, ou à un équipement électrique externe au véhicule et d'autre part à au moins une des cellules d'alimentation 10, 20, 30.

Lorsque le module de connexion 40 est connecté à un réseau d'alimentation, alors le réseau d'alimentation permet de recharger au moins une batterie B1, B1', B1", B2, B2', B2" de l'au moins une cellule d'alimentation 10, 20, 30 connectée audit module de connexion 40.

Lorsque le module de connexion 40 est connecté à un équipement électrique, alors au moins une batterie B1, B1', B1", B2, B2', B2" de l'au moins une cellule d'alimentation 10, 20, 30 connectée audit module de connexion 40 permet d'alimenter en énergie ledit équipement.

Plus précisément, si la tension alternative fournie par le réseau d'alimentation, ou si la tension nécessaire pour alimenter l'équipement électrique, est monophasée, alors le module de connexion 40 est apte à connecter la tension monophasée à chaque cellule d'alimentation 10, 20, 30. Si la tension alternative fournie par le réseau d'alimentation, ou si la tension nécessaire pour alimenter l'équipement électrique, est triphasée, alors le module de connexion 40 est apte à connecter chaque phase de ladite tension alternative à un cellule d'alimentation 10, 20, 30 qui lui est propre.

Plus précisément encore, le module de connexion 40 comprend une première borne de connexion 41, une deuxième borne de connexion 42 et une troisième borne de connexion 43.

Lorsque la tension alternative fournie par le réseau d'alimentation, ou lorsque la tension nécessaire pour alimenter l'équipement électrique, est triphasée, alors chaque phase de ladite tension est connectée à une borne de connexion 41, 42, 43 qui lui est propre. A l'inverse, lorsque la tension alternative fournie par le réseau d'alimentation, ou lorsque la tension nécessaire pour alimenter l'équipement électrique, est monophasée, la phase de ladite tension est connectée à la première borne de connexion 41.

De plus, une première borne de connexion 41 est reliée à la première cellule d'alimentation 10, plus précisément à une borne d'entrée du transformateur Tr1 de la première cellule de d'alimentation 10. Une deuxième borne de connexion 42 est reliée à la deuxième cellule d'alimentation 20, plus précisément à une borne d'entrée du transformateur Tr2 de la deuxième cellule d'alimentation 20. Une troisième borne de connexion 43 est reliée à la troisième cellule d'alimentation 30, plus précisément à une borne d'entrée du transformateur Tr3 de la troisième cellule de d'alimentation 30.

Le module de connexion 40 comprend également :
a) un premier interrupteur I5, configuré pour :
   i) selon une première position : connecter la première borne de connexion 41 à la deuxième cellule d'alimentation 20, et plus précisément à une borne d'entrée du transformateur Tr2 de la deuxième cellule d'alimentation 20,
   ii) selon une deuxième position : connecter la deuxième borne de connexion 42 à la deuxième cellule d'alimentation 20, et plus précisément à une borne d'entrée du transformateur Tr2 de la deuxième cellule d'alimentation 20,
b) un deuxième interrupteur I6 configuré pour :
   i) selon une première position : connecter la première borne de connexion 41 à la troisième cellule d'alimentation 30, et plus précisément à une borne d'entrée du transformateur Tr3 de la troisième cellule d'alimentation 30,
   ii) selon une deuxième position : notamment lorsque la tension alternative fournie par le réseau d'alimentation, ou lorsque la tension nécessaire pour alimenter l'équipement électrique, est triphasée, connecter la troisième borne de connexion 43 à la troisième cellule d'alimentation 30, et plus précisément à une borne d'entrée du transformateur Tr3 de la troisième cellule d'alimentation 30.

Par défaut, le premier interrupteur I5 et le deuxième interrupteur I6 sont dans la deuxième position.

De plus, le module de connexion 40 est également relié à la ligne neutre N de la tension alternative et le module de connexion 40 est configuré pour relier la ligne neutre N à la deuxième borne d'entrée de chaque transformateur Tr1, Tr2, Tr3.

Par ailleurs, chaque cellule d'alimentation 10, 20, 30 peut également comprendre un filtre CEM, pour « compatibilité électro-magnétique », connecté entre chaque transformateur Tr1, Tr2, Tr3 et le module de connexion 40.

En référence aux figures 1, 2, 4, 6, lorsque la tension est triphasée, le premier interrupteur I5 et le deuxième interrupteur I6 du module de connexion 40 fonctionnent selon la deuxième position et chaque phase de ladite tension est reliée électriquement à une borne de connexion 41, 42, 43.

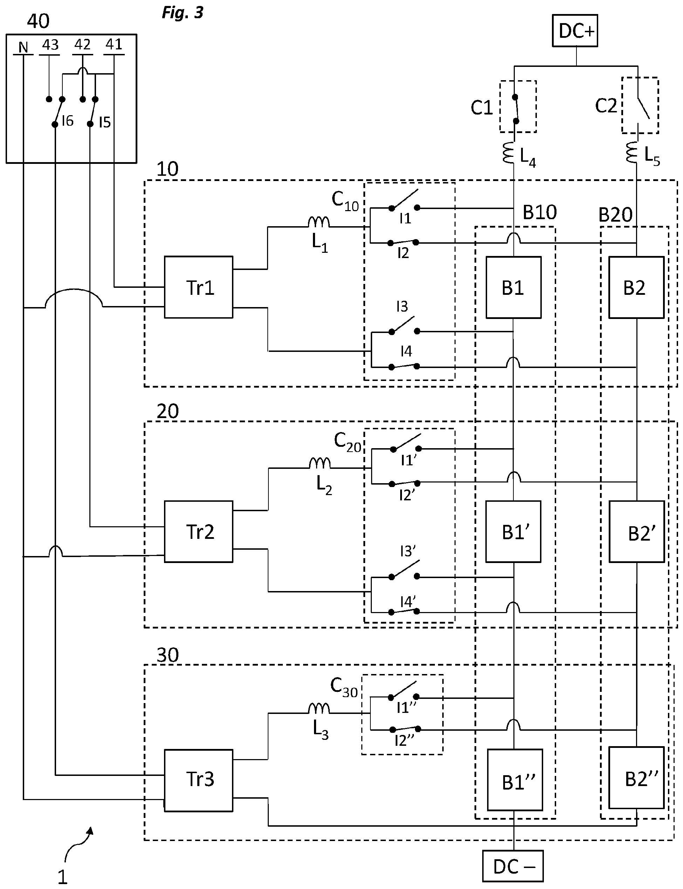

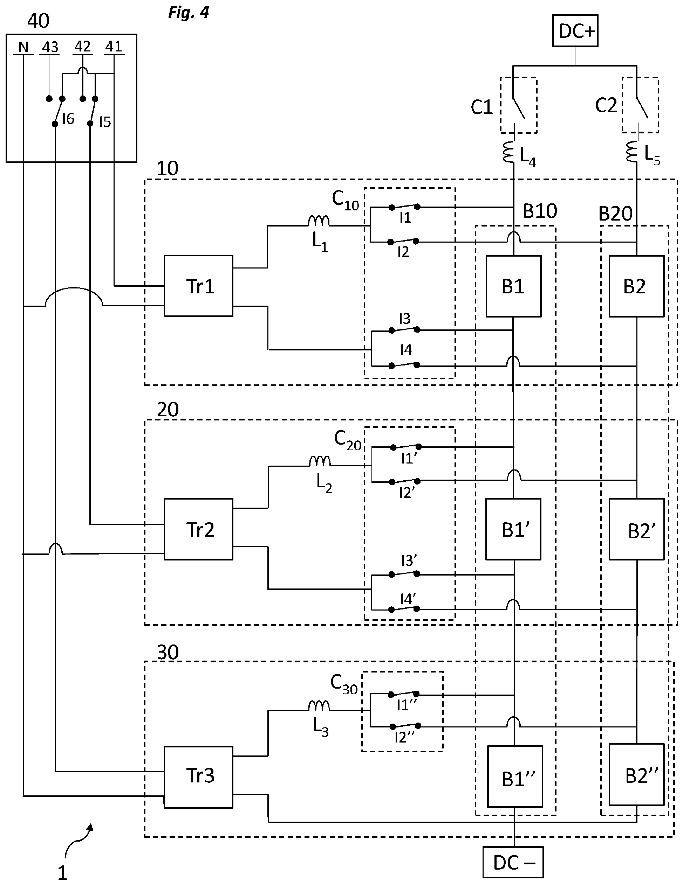

En référence aux figures 3 et 4, lorsque la tension est monophasée, ladite tension monophasée est reliée à la première borne de connexion 41 et le premier interrupteur I5 et le deuxième interrupteur I6 du module de connexion 40 fonctionnent selon la première position. Ainsi, la tension monophasée est connectée aux trois cellules d'alimentation 10, 20, 30.

L'unité de contrôle (non représentée sur les figures) est configurée pour commander les interrupteurs I5, I6 du module de connexion 40, du premier commutateur C1 et du deuxième commutateur C2, chaque interrupteur de chaque cellule d'alimentation 10, 20, 30 et chaque transformateur Tr1, Tr2, Tr3. L'unité de contrôle permet également de contrôler la tension générée et fournie par chaque batterie B1, B1', B1", B2, B2', B2", afin par exemple de réguler le courant dans les inductances L1, L2, L3 ou de réguler la tension fournie par le bus d'alimentation DC.

### modes de fonctionnement

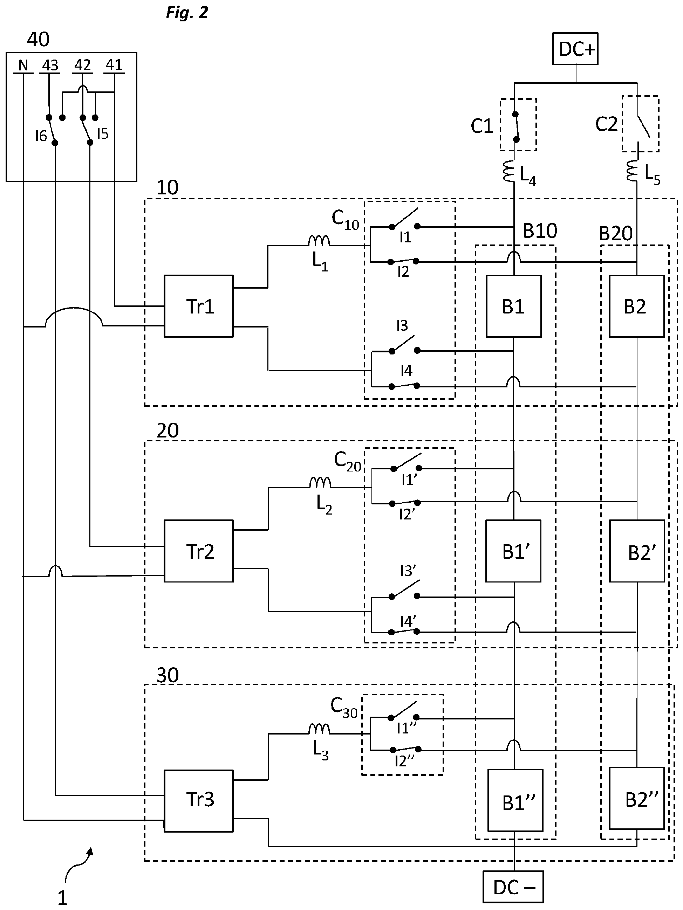

En référence aux figures 2 à 6, il va maintenant être décrit les différents modes de fonctionnement du système d'alimentation 1 tel que présenté précédemment. De préférence, le système d'alimentation 1 présente cinq modes de fonctionnement différents.

### 1er MDF (triphasé, B10 à DC et B20 à 40)

Lorsque le système d'alimentation 1 fonctionne selon le premier mode de fonctionnement, la première batterie B1, B1', B1" ou la deuxième batterie B2, B2', B2" de chaque cellule d'alimentation 10, 20, 30 est connectée au bus d'alimentation électrique du véhicule, et notamment connectée entre la borne positive DC+ et la borne négative DC-. La première batterie B1, B1', B1" ou la deuxième batterie B2, B2', B2" non connectée au bus d'alimentation, est reliée au module de connexion 40.

Autrement dit, une branche parmi la première branche B10 ou la deuxième branche B20 est reliée au bus d'alimentation, et notamment connectée entre la borne positive DC+ et la borne négative DC-, afin d'alimenter en énergie électrique les équipements électriques montés dans le véhicule et l'autre branche est reliée au module de connexion 40, afin d'alimenter en énergie électrique un équipement externe au véhicule ou afin de recharger les batteries de ladite branche à partir d'un réseau d'alimentation alternatif.

Selon l'exemple représenté à la figure 2, la première branche B10 est connectée au bus d'alimentation, et notamment connectée entre la borne positive DC+ et la borne négative DC-. Pour cela, le premier commutateur C1 est fermé. De plus, la deuxième branche B20 est connectée au module de connexion 40. Pour cela, d'une part, chaque premier interrupteur I1, I1', I1", et chaque troisième interrupteur I3, I3' est ouvert, et d'autre part, chaque deuxième interrupteur I2, I2', I2" et chaque quatrième interrupteur I4, I4' est fermé.

Le premier mode de fonctionnement représente également le cas où la tension fournie par le réseau électrique, ou la tension à fournir à l'équipement électrique, connecté au module de connexion 40 est triphasée. Le cinquième interrupteur I5 et le sixième interrupteur I6 fonctionnent selon la deuxième position. Chaque phase de la tension triphasée est reliée à une borne de connexion 41, 42, 43 qui lui est propre.

### 2eme MDF (monophasé, B10 à DC et B20 à 40)

En référence à la figure 3, il est représenté le système d'alimentation 1 fonctionnant selon le deuxième mode de fonctionnement, dans lequel le module de connexion 40 connecte la tension monophasée l'ensemble des cellules d'alimentation 10, 20, 30.

Pour chaque cellule d'alimentation 10, 20, 30 :
a. la première batterie B1, B1', B1" ou la deuxième batterie B2, B2', B2" est connectée au bus d'alimentation DC, et notamment connectée entre la borne positive DC+ et la borne négative DC-,
b. la batterie non connectée au bus d'alimentation est connectée au module de connexion 40 et fonctionne selon le mode de charge ou de décharge.

La tension étant monophasée, le cinquième interrupteur I5 et le sixième interrupteur I6 fonctionnent selon la première position.

### 3eme MDF (monophasé, toutes les batteries reliées à module 40)

En référence à la figure 4, lorsque le système d'alimentation 1 fonctionne selon le troisième mode de fonctionnement, le module de connexion 40 connecte la tension monophasée à l'ensemble des cellules d'alimentation 10, 20, 30.

De plus, chaque interrupteur de chaque cellule d'alimentation 10, 20, 30 est fermé. Enfin, le premier commutateur C1 et le deuxième commutateur C2 sont ouverts, de sorte que chaque batterie fonctionne selon le mode de charge ou selon le mode de décharge.

Ainsi, chacune des premières batteries B1, B1', B1" et des deuxièmes batteries B2, B2', B2" de chaque cellule d'alimentation 10, 20, 30 connectée à la tension monophasée est reliée au module de connexion 40 via un transformateur Tr1, Tr2, Tr3.

Notamment, si le module de connexion 40 est connecté à un équipement électrique externe au véhicule, alors chacune des batteries connectée fonctionne selon le mode de décharge et permet d'alimenter ledit équipement.

A l'inverse, si le module de connexion 40 est connecté à un réseau d'alimentation externe au véhicule, alors chacune des batteries connectée fonctionne selon le mode de charge et est alimentée à partir de l'énergie électrique fournie par ledit réseau.

Le cinquième interrupteur I5 et le sixième interrupteur I6 fonctionnent selon la première position.

Ainsi, soit la tension monophasée permet de recharger les batteries de la première branche B10 et de la deuxième branche B20, soit les batteries permet d'alimenter un équipement électrique qui fonctionne à partir d'une tension monophasée.

### 4eme MDF (triphasé, toutes les batteries reliées à module 40)

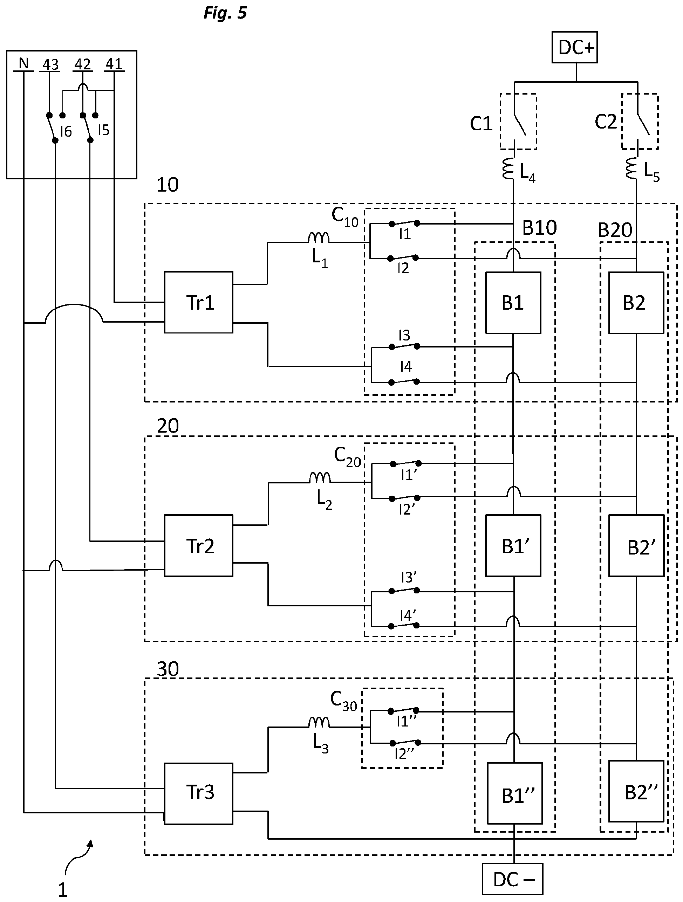

En référence à la figure 5, lorsque le système d'alimentation 1 fonctionne selon le quatrième mode de fonctionnement, tous les interrupteurs de chaque cellule d'alimentation 10, 20, 30 sont fermés, le premier commutateur C1 et le deuxième commutateur C2 sont ouverts, comme dans le cas où le système d'alimentation 1 fonctionne selon le troisième mode de fonctionnement.

Cependant, dans le cas présent, le quatrième mode de fonctionnement représente le cas où la tension fournie par le réseau électrique, ou la tension à fournir à l'équipement électrique, connecté au module de connexion 40 est triphasée. Le cinquième interrupteur I5 et le sixième interrupteur I6 fonctionnent selon la deuxième position afin que chaque phase de ladite tension triphasée soit reliée à une borne de connexion 41, 42, 43.

Ainsi, soit la tension triphasée permet de recharger l'ensemble des batteries de la première branche B10 et de la deuxième branche B20, soit l'ensemble des batteries permet d'alimenter un équipement électrique qui fonctionne à partir d'une tension triphasée.

### 5^{er} MDF

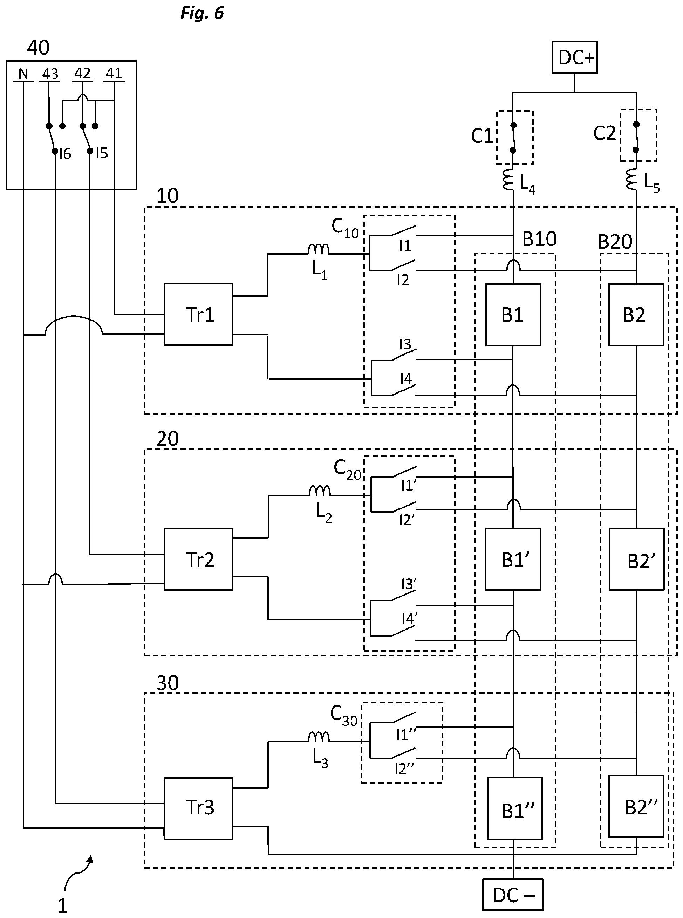

En référence à la figure 6, lorsque le système d'alimentation 1 fonctionne selon le cinquième mode de fonctionnement, le premier commutateur C1 et le deuxième commutateur C2 sont fermés, tous les interrupteurs de chacune des cellules de commutation C₁₀, C₂₀, C₃₀sont ouverts.

Ainsi, la première batterie B1, B1', B1" et la deuxième batterie B2, B2', B2" alimentent le bus de d'alimentation en énergie électrique. Les équipements électriques embarqués dans le véhicule sont donc alimentés à partir de l'énergie fournie par la première branche B10 et la deuxième branche 20.

## Revendications

1. Système d'alimentation (1) électrique pour véhicule électrique ou hybride, le véhicule comprenant un bus d'alimentation (DC+, DC-) électrique apte à alimenter des équipements électriques montés dans le véhicule, ledit système (1) comprenant :
a) au moins deux cellules d'alimentation (10, 20, 30) comprenant chacune :
i) un transformateur (Tr1, Tr2, Tr3) bidirectionnel, apte à fournir une tension alternative à partir d'une tension continue et inversement,
ii) une première batterie (B1, B1', B1") apte à fonctionner selon un mode de décharge, dans lequel la première batterie (B1, B1', B1") est apte à fournir une première tension continue et apte à fonctionner selon un mode de charge dans lequel la première batterie (B1, B1', B1") est apte à se recharger à partir d'une tension continue,
iii) une deuxième batterie (B2, B2', B2") apte à fonctionner selon un mode de décharge, dans lequel la première batterie (B2, B2', B2") est apte à fournir une première tension continue et apte à fonctionner selon un mode de charge dans lequel la deuxième batterie (B2, B2', B2") est apte à se recharger à partir d'une tension continue,
iv) une cellule de commutation (C₁₀, C₂₀, C₃₀) comprenant des interrupteurs (I1, I1', I1", I2, I2', I2", I3, I3', I4, I4'), aptes à connecter la première batterie (B1, B1', B1") et/ou la deuxième batterie (B2, B2', B2") au transformateur (Tr1, Tr2, Tr3),
b) un premier commutateur (C1) apte à connecter la première batterie (B1, B1', B1") de chaque cellule d'alimentation (10, 20, 30) au bus d'alimentation électrique (DC+, DC-),
c) un deuxième commutateur (C2) apte à connecter la deuxième batterie (B2, B2', B2") au bus d'alimentation électrique (DC+, DC-),
d) un module de connexion (40) apte à connecter électriquement chaque cellule d'alimentation (10, 20, 30) à un réseau d'alimentation électrique apte à fournir une tension alternative ou à un équipement électrique externe au véhicule apte à être alimenté à partir d'une tension alternative :
i) si la tension alternative fournie par le réseau d'alimentation, ou si la tension nécessaire pour alimenter l'équipement électrique, est monophasée, le module de connexion (40) est apte à connecter la tension monophasée à au moins une cellule d'alimentation (10, 20, 30),
ii) si la tension alternative fournie par le réseau d'alimentation, ou si la tension nécessaire pour alimenter l'équipement électrique, est triphasée, le module de connexion (40) est apte à connecter chaque phase de ladite tension à une cellule d'alimentation (10, 20, 30) qui lui est propre,
e) une unité de contrôle configurée pour commander le module de connexion (40), le premier commutateur (C1) et le deuxième commutateur (C2),
le système électrique (1) est apte à fonctionner selon une pluralité de modes de fonctionnement :
i) un premier mode de fonctionnement dans lequel le module de connexion (40) connecte chaque phase de la tension triphasée fournie par le réseau d'alimentation à une cellule d'alimentation (10, 20, 30) qui lui est propre et, pour chaque cellule d'alimentation (10, 20, 30) :
1) la première batterie (B1, B1', B1") ou la deuxième batterie (B2, B2', B2") est connectée au bus d'alimentation (DC+, DC-),
2) la batterie non connectée au bus d'alimentation (DC+, DC-) est connectée au module de connexion (40) et fonctionne selon le mode de charge ou de décharge,
ii) un deuxième mode de fonctionnement dans lequel le module de connexion (40) connecte la tension monophasée fournie par le réseau d'alimentation à au moins une cellule d'alimentation (10, 20, 30) et, pour chaque cellule d'alimentation (10, 20, 30) connectée à la tension monophasée :
1) la première batterie (B1, B1', B1") ou la deuxième batterie (B2, B2', B2") est connectée au bus d'alimentation (DC+, DC-),
2) la batterie non connectée au bus d'alimentation (DC+, DC-) est connectée au module de connexion (40) et fonctionne selon le mode de charge ou de décharge.

2. Système d'alimentation (1) selon la revendication précédente, dans lequel l'ensemble des premières batteries (B1, B1', B1") de chaque cellule d'alimentation (10, 20, 30) est relié en série, et l'ensemble des deuxièmes batteries (B2, B2', B2") de chaque cellule d'alimentation (10, 20, 30) est relié en série.

3. Système d'alimentation (1) électrique selon l'une quelconque des revendications précédentes, étant configuré pour fonctionner selon :
a) un troisième mode de fonctionnement dans lequel :
i) le module de connexion (40) connecte la tension monophasée à au moins une cellule d'alimentation (10, 20, 30),
ii) chaque interrupteur de chaque cellule d'alimentation (10, 20, 30) connectée à la tension monophasée est fermé,
iii) le premier commutateur (C1) et le deuxième commutateur (C2) sont ouverts, de sorte que chaque batterie (B1, B1', B1", B2, B2', B2") fonctionne selon le mode de charge ou selon le mode de décharge,
b) un quatrième mode de fonctionnement dans lequel :
i) le module de connexion (40) étant apte à connecter chaque phase de ladite tension à une cellule d'alimentation (10, 20, 30) qui lui est propre,
ii) chaque interrupteur (I1, I1', I1", I2, I2', I2", I3, I3', I4, I4') de chaque cellule d'alimentation (10, 20, 30) est fermé,
iii) le premier commutateur (C1) et le deuxième commutateur (C2) sont ouverts, de sorte que chaque batterie (B1, B1', B1", B2, B2', B2") fonctionne selon le mode de charge ou selon le mode de décharge.

4. Système d'alimentation (1) électrique selon la revendication précédente, ledit système (1) est configuré pour fonctionner selon un cinquième mode de fonctionnement dans lequel le premier commutateur (C1) et le deuxième commutateur (C2) sont fermés, chaque interrupteur (I1, I1', I1", I2, I2', I2", I3, I3', I4, I4') de chaque cellule d'alimentation (10, 20, 30) étant ouvert, de sorte que la première batterie (B1, B1', B1") et la deuxième batterie (B2, B2', B2") alimentent le bus de d'alimentation (DC+, DC-) en énergie électrique.

5. Système d'alimentation (1) selon l'une quelconque des revendications précédentes, dans lequel le module de connexion (40) comprend :
a) une première borne de connexion (41) reliée électriquement à la première cellule d'alimentation (10),
b) une deuxième borne de connexion (42),
c) une troisième borne de connexion (43),
d) un premier interrupteur (I5), apte à relier la deuxième cellule d'alimentation (20) à la première borne de connexion (41) ou à la deuxième borne de connexion (42),
e) un deuxième interrupteur (I6) apte à connecter la troisième cellule d'alimentation (30) à la première borne de connexion (41) ou à la troisième borne de connexion (43).

6. Système d'alimentation (1) selon la revendication précédente, dans lequel :
a) la première borne de connexion (41) est reliée électriquement au transformateur (Tr1) de la première cellule d'alimentation (10),
b) le premier interrupteur (I5) est apte à relier le transformateur (Tr2) de la deuxième cellule d'alimentation (20) à la première borne de connexion (41) ou à la deuxième borne de connexion (42),
c) le deuxième interrupteur (I6) est apte à relier le transformateur (Tr3) de la troisième cellule d'alimentation (30) à la première borne de connexion (41) ou à la troisième borne de connexion (43).

7. Système d'alimentation (1) selon l'une quelconque des revendications 5 à 6, dans lequel :
a) lorsque le système (1) fonctionne selon le premier mode de fonctionnement, le premier interrupteur (I5) du module de connexion (40) connecte la deuxième borne de connexion (42) à la deuxième cellule d'alimentation (20) et le deuxième interrupteur (I6) du module de connexion (40) connecte la troisième borne de connexion (43) à la troisième cellule d'alimentation (30),
b) lorsque le système (1) fonctionne selon le deuxième mode de fonctionnement :
- le premier interrupteur (I5) connecte la première borne de connexion (41) à la deuxième cellule d'alimentation (20) et le deuxième interrupteur (I6) connecte la première borne de connexion (41) à la troisième cellule d'alimentation (30), lorsque toutes les cellules d'alimentation (10, 20, 30) sont connectées au module de connexion (40),
- le premier interrupteur (I5) du module de connexion connecte la deuxième borne de connexion (42) à la deuxième cellule d'alimentation (20) et le deuxième interrupteur (I6) du module de connexion connecte la troisième borne de connexion (43) à la troisième cellule d'alimentation (30) lorsqu'une seule cellule d'alimentation (10, 20, 30) est connectée au module de connexion (40).

8. Système d'alimentation (1) selon l'une quelconque des revendications précédentes, comprenant trois cellules d'alimentation (10, 20, 30).

9. Véhicule automobile comprenant un bus d'alimentation (DC+, DC-) électrique apte à alimenter des équipements électriques montés dans le véhicule et un système d'alimentation (1) électrique selon l'une quelconque des revendications précédentes.

## Patentansprüche

1. Stromversorgungssystem (1) für ein Elektro- oder Hybridfahrzeug, wobei das Fahrzeug einen elektrischen Stromversorgungsbus (DC+, DC-) umfasst, der zur Versorgung der im Fahrzeug eingebauten elektrischen Geräte geeignet ist, das System (1) umfassend:
a) mindestens zwei Versorgungszellen (10, 20, 30), die jeweils umfassen:
i) einen bidirektionalen Transformator (Tr1, Tr2, Tr3), der dazu geeignet ist, aus einer Gleichspannung eine Wechselspannung zu liefern und umgekehrt,
ii) eine erste Batterie (B1, B1', B1"), die dazu geeignet ist, in einem Entlademodus betrieben zu werden, in dem die erste Batterie (B1, B1', B1") dazu geeignet ist, eine erste Gleichspannung zu liefern, und dazu geeignet ist, in einem Lademodus betrieben zu werden, in dem die erste Batterie (B1, B1', B1") dazu geeignet ist, aus einer Gleichspannung aufgeladen zu werden,
iii) eine zweite Batterie (B2, B2', B2"), die dazu geeignet ist, in einem Entlademodus betrieben zu werden, in dem die erste Batterie (B2, B2', B2") dazu geeignet ist, eine erste Gleichspannung zu liefern, und dazu geeignet ist, in einem Lademodus betrieben zu werden, in dem die zweite Batterie (B2, B2', B2") dazu geeignet ist, aus einer Gleichspannung aufgeladen zu werden,
iv) eine Schaltzelle (C₁₀, C₂₀, C₃₀), umfassend Schalter (I1, I1', I1", I2, I2', I2", I3, I3', I4, I4'), die dazu geeignet sind, die erste Batterie (B1, B1', B1") und/oder die zweite Batterie (B2, B2', B2") mit dem Transformator (Tr1, Tr2, Tr3) zu verbinden,
b) einen ersten Umschalter (C1), der dazu geeignet ist, die erste Batterie (B1, B1', B1") jeder Versorgungszelle (10, 20, 30) mit dem Stromversorgungsbus (DC+, DC-) zu verbinden,
c) einen zweiten Umschalter (C2), der dazu geeignet ist, die zweite Batterie (B2, B2', B2") mit dem Stromversorgungsbus (DC+, DC-) zu verbinden,
d) ein Verbindungsmodul (40), das dazu geeignet ist, jede Versorgungszelle (10, 20, 30) mit einem Stromversorgungsnetz, das dazu geeignet ist, eine Wechselspannung zu liefern, oder mit einem fahrzeugexternen elektrischen Gerät, das dazu geeignet ist, mit einer Wechselspannung versorgt zu werden, elektrisch zu verbinden:
i) wenn die von dem Stromnetz gelieferte Wechselspannung oder die zur Versorgung des elektrischen Geräts erforderliche Spannung einphasig ist, ist das Verbindungsmodul (40) dazu geeignet, die einphasige Spannung mit mindestens einer Versorgungszelle (10, 20, 30) zu verbinden,
ii) wenn die von dem Stromnetz gelieferte Wechselspannung oder die zur Versorgung des elektrischen Geräts erforderliche Spannung dreiphasig ist, ist das Verbindungsmodul (40) dazu geeignet, jede Phase der Spannung mit einer ihr zugeordneten Versorgungszelle (10, 20, 30) zu verbinden,
e) eine Steuereinheit, die dazu konfiguriert ist, das Verbindungsmodul (40), den ersten Umschalter (C1) und den zweiten Umschalter (C2) anzusteuern,
das Stromversorgungssystem (1) ist dazu geeignet, gemäß einer Vielzahl von Betriebsmodi zu arbeiten:
i) in einem ersten Betriebsmodus, in dem das Verbindungsmodul (40) jede Phase der von dem Stromnetz gelieferten dreiphasigen Spannung mit einer ihr zugeordneten Versorgungszelle (10, 20, 30) verbindet und wobei für jede Versorgungszelle (10, 20, 30):
1) die erste Batterie (B1, B1', B1") oder die zweite Batterie (B2, B2', B2") mit dem Versorgungsbus (DC+, DC-) verbunden ist,
2) die nicht mit dem Versorgungsbus (DC+, DC-) verbundene Batterie mit dem Verbindungsmodul (40) verbunden ist und im Lade- oder Entlademodus betrieben wird,
ii) in einem zweiten Betriebsmodus, in dem das Verbindungsmodul (40) die von dem Stromnetz gelieferte einphasige Spannung mit mindestens einer Versorgungszelle (10, 20, 30) verbindet und wobei für jede Versorgungszelle (10, 20, 30), die mit der einphasigen Spannung verbunden ist:
1) die erste Batterie (B1, B1', B1") oder die zweite Batterie (B2, B2', B2") mit dem Versorgungsbus (DC+, DC-) verbunden ist,
2) die nicht mit dem Versorgungsbus (DC+, DC-) verbundene Batterie mit dem Verbindungsmodul (40) verbunden ist und im Lade- oder Entlademodus betrieben wird.

2. Stromversorgungssystem (1) nach dem vorhergehenden Anspruch, bei dem die Gesamtheit der ersten Batterien (B1, B1', B1") jeder Versorgungszelle (10, 20, 30) in Reihe geschaltet ist und die Gesamtheit der zweiten Batterien (B2, B2', B2") jeder Versorgungszelle (10, 20, 30) in Reihe geschaltet ist.

3. Stromversorgungssystem (1) nach einem der vorhergehenden Ansprüche, das dafür konfiguriert ist, in einem der folgenden Modi betrieben zu werden:
a) einem dritten Betriebsmodus, in dem:
i) das Verbindungsmodul (40) die einphasige Spannung mit mindestens einer Versorgungszelle (10, 20, 30) verbindet,
ii) jeder Schalter jeder Versorgungszelle (10, 20, 30), die mit der einphasigen Spannung verbunden ist, geschlossen ist,
iii) der erste Umschalter (C1) und der zweite Umschalter (C2) offen sind, so dass jede Batterie (B1, B1', B1", B2, B2', B2") im Lademodus oder im Entlademodus betrieben wird,
b) einem vierten Betriebsmodus, in dem:
i) das Verbindungsmodul (40) dazu geeignet ist, jede Phase der Spannung mit einer ihr zugeordneten Versorgungszelle (10, 20, 30) zu verbinden,
ii) jeder Schalter (11, I1', I1", I2, I2', I2", I3, I3', I4, I4') jeder Versorgungszelle (10, 20, 30) geschlossen ist,
iii) der erste Umschalter (C1) und der zweite Umschalter (C2) offen sind, so dass jede Batterie (B1, B1', B1", B2, B2', B2") im Lademodus oder im Entlademodus betrieben wird.

4. Stromversorgungssystem (1) nach dem vorhergehenden Anspruch, wobei das System (1) dazu konfiguriert ist, in einem fünften Betriebsmodus betrieben zu werden, in dem der erste Umschalter (C1) und der zweite Umschalter (C2) geschlossen sind, wobei jeder Schalter (I1, 11', I1", I2, I2', I2", I3, I3', I4, I4') jeder Versorgungszelle (10, 20, 30) offen ist, so dass die erste Batterie (B1, B1', B1") und die zweite Batterie (B2, B2', B2") den Versorgungsbus (DC+, DC-) mit elektrischer Energie versorgen.

5. Versorgungssystem (1) nach einem der vorhergehenden Ansprüche, bei dem das Verbindungsmodul (40) umfasst:
a) eine erste Verbindungsklemme (41), die elektrisch an die erste Versorgungszelle (10) angeschlossen ist,
b) eine zweite Verbindungsklemme (42),
c) eine dritte Verbindungsklemme (43),
d) einen ersten Schalter (I5), der dazu geeignet ist, die zweite Versorgungszelle (20) an die erste Verbindungsklemme (41) oder an die zweite Verbindungsklemme (42) anzuschließen,
e) einen zweiten Schalter (I6), der dazu geeignet ist, die dritte Versorgungszelle (30) mit der ersten Verbindungsklemme (41) oder mit der dritten Verbindungsklemme (43) zu verbinden.

6. Versorgungssystem (1) nach dem vorhergehenden Anspruch, bei dem:
a) die erste Verbindungsklemme (41) elektrisch an den Transformator (Tr1) der ersten Versorgungszelle (10) angeschlossen ist,
b) der erste Schalter (I5) dazu geeignet ist, den Transformator (Tr2) der zweiten Versorgungszelle (20) an die erste Verbindungsklemme (41) oder an die zweite Verbindungsklemme (42) anzuschließen,
c) der zweite Schalter (I6) dazu geeignet ist, den Transformator (Tr3) der dritten Versorgungszelle (30) an die erste Verbindungsklemme (41) oder an die dritte Verbindungsklemme (43) anzuschließen.

7. Versorgungssystem (1) nach einem der Ansprüche 5 bis 6, wobei:
a) wenn das System (1) im ersten Betriebsmodus betrieben wird, der erste Schalter (I5) des Verbindungsmoduls (40) die zweite Verbindungsklemme (42) mit der zweiten Versorgungszelle (20) verbindet und der zweite Schalter (I6) des Verbindungsmoduls (40) die dritte Verbindungsklemme (43) mit der dritten Versorgungszelle (30) verbindet,
b) wenn das System (1) im zweiten Betriebsmodus betrieben wird:
- der erste Schalter (I5) die erste Verbindungsklemme (41) mit der zweiten Versorgungszelle (20) verbindet und der zweite Schalter (I6) die erste Verbindungsklemme (41) mit der dritten Versorgungszelle (30) verbindet, wenn alle Versorgungszellen (10, 20, 30) mit dem Verbindungsmodul (40) verbunden sind,
- der erste Schalter (I5) des Verbindungsmoduls die zweite Verbindungsklemme (42) mit der zweiten Versorgungszelle (20) verbindet und der zweite Schalter (I6) des Verbindungsmoduls die dritte Verbindungsklemme (43) mit der dritten Versorgungszelle (30) verbindet, wenn eine einzige Versorgungszelle (10, 20, 30) mit dem Verbindungsmodul (40) verbunden ist.

8. Versorgungssystem (1) nach einem der vorhergehenden Ansprüche, umfassend drei Versorgungszellen (10, 20, 30).

9. Kraftfahrzeug, umfassend einen Stromversorgungsbus (DC+, DC-), der zum Versorgen der im Kraftfahrzeug eingebauten elektrischen Geräte geeignet ist, sowie ein Stromversorgungssystem (1) nach einem der vorhergehenden Ansprüche.

## Claims

1. Electrical power supply system (1) for an electric or hybrid vehicle, the vehicle comprising an electrical power supply bus (DC+, DC-) designed to supply electrical equipment installed in the vehicle, said system (1) comprising:
a) at least two power supply cells (10, 20, 30) each comprising:
i) a bidirectional transformer (Tr1, Tr2, Tr3), designed to supply an AC voltage starting from a DC voltage and vice versa,
ii) a first battery (B1, B1', B1") designed to operate according to a discharge mode, in which the first battery (B1, B1', B1") is designed to supply a first DC voltage, and designed to operate according to a charging mode in which the first battery (B1, B1', B1") is designed to be recharged from a DC voltage,
iii) a second battery (B2, B2', B2") designed to operate according to a discharge mode, in which the first battery (B2, B2', B2") is designed to supply a first DC voltage, and designed to operate according to a charging mode in which the second battery (B2, B2', B2") is designed to be recharged from a DC voltage,
iv) a switching cell (C₁₀, C₂₀, C₃₀) comprising switches (11, I1', I1", I2, I2', I2", I3, I3', I4, I4'), designed to connect the first battery (B1, B1', B1") and/or the second battery (B2, B2', B2") to the transformer (Tr1, Tr2, Tr3),
b) a first switching unit (C1) designed to connect the first battery (B1, B1', B1") of each power supply cell (10, 20, 30) to the electrical supply bus (DC+, DC-),
c) a second switching unit (C2) designed to connect the second battery (B2, B2', B2") to the electrical supply bus (DC+, DC-),
d) a connection module (40) designed to electrically connect each power supply cell (10, 20, 30) to an electrical power supply system, designed to supply an AC voltage, or to electrical equipment external to the vehicle, designed to be supplied from an AC voltage:
i) if the AC voltage supplied by the power supply system, or if the voltage needed to supply the electrical equipment, is single-phase, the connection module (40) is designed to connect the single-phase voltage to at least one power supply cell (10, 20, 30),
ii) if the AC voltage supplied by the power supply system, or if the voltage needed to supply the electrical equipment, is three-phase, the connection module (40) is designed to connect each phase of said voltage to a power supply cell (10, 20, 30) specific to it,
e) a control unit configured for controlling the connection module (40), the first switching unit (C1) and the second switching unit (C2),
the electrical system (1) is designed to operate according to a plurality of operating modes:
i) a first mode of operation in which the connection module (40) connects each phase of the three-phase voltage supplied by the power supply system to a power supply cell (10, 20, 30) specific to it and, for each power supply cell (10, 20, 30):
1) the first battery (B1, B1', B1") or the second battery (B2, B2', B2") is connected to the power supply bus (DC+, DC-),
2) the battery not connected to the power supply bus (DC+, DC-) is connected to the connection module (40) and operates according to the charging or discharge mode,
ii) a second mode of operation in which the connection module (40) connects the single-phase voltage supplied by the power supply system to at least one power supply cell (10, 20, 30) and, for each power supply cell (10, 20, 30) connected to the single-phase voltage:
1) the first battery (B1, B1', B1") or the second battery (B2, B2', B2") is connected to the power supply bus (DC+, DC-),
2) the battery not connected to the power supply bus (DC+, DC-) is connected to the connection module (40) and operates according to the charging or discharge mode.

2. Power supply system (1) according to the preceding claim, in which the assembly of the first batteries (B1, B1', B1") of each power supply cell (10, 20, 30) is connected in series, and the assembly of the second batteries (B2, B2', B2") of each power supply cell (10, 20, 30) is connected in series.

3. Electrical power supply system (1) according to any one of the preceding claims, being configured to operate according to:
a) a third mode of operation in which:
i) the connection module (40) connects the single-phase voltage to at least one power supply cell (10, 20, 30),
ii) each switch of each power supply cell (10, 20, 30) connected to the single-phase voltage is closed,
iii) the first switching unit (C1) and the second switching unit (C2) are open, such that each battery (B1, B1', B1", B2, B2', B2") operates according to the charging mode or according to the discharge mode,
b) a fourth mode of operation in which:
i) the connection module (40) is designed to connect each phase of said voltage to a power supply cell (10, 20, 30) specific to it,
ii) each switch (11, I1', I1", I2, I2', I2", I3, I3', I4, I4') of each power supply cell (10, 20, 30) is closed,
iii) the first switching unit (C1) and the second switching unit (C2) are open, such that each battery (B1, B1', B1", B2, B2', B2") operates according to the charging mode or according to the discharge mode.

4. Electrical power supply system (1) according to the preceding claim, said system (1) being configured for operating according to a fifth mode of operation in which the first switching unit (C1) and the second switching unit (C2) are closed, each switch (11, I1', I1", I2, I2', I2", I3, I3', I4, I4') of each power supply cell (10, 20, 30) being open, such that the first battery (B1, B1', B1") and the second battery (B2, B2', B2") supply electrical energy to the power supply bus (DC+, DC-).

5. Power supply system (1) according to any one of the preceding claims, in which the connection module (40) comprises:
a) a first connection terminal (41) electrically connected to the first power supply cell (10),
b) a second connection terminal (42),
c) a third connection terminal (43),
d) a first switch (I5), designed to connect the second power supply cell (20) to the first connection terminal (41) or to the second connection terminal (42),
e) a second switch (I6) designed to connect the third power supply cell (30) to the first connection terminal (41) or to the third connection terminal (43).

6. Power supply system (1) according to the preceding claim, in which:
a) the first connection terminal (41) is electrically connected to the transformer (Tr1) of the first power supply cell (10),
b) the first switch (I5) is designed to connect the transformer (Tr2) of the second power supply cell (20) to the first connection terminal (41) or to the second connection terminal (42),
c) the second switch (I6) is designed to connect the transformer (Tr3) of the third power supply cell (30) to the first connection terminal (41) or to the third connection terminal (43).

7. Power supply system (1) according to either one of Claims 5 and 6, in which:
a) when the system (1) operates according to the first mode of operation, the first switch (I5) of the connection module (40) connects the second connection terminal (42) to the second power supply cell (20) and the second switch (I6) of the connection module (40) connects the third connection terminal (43) to the third power supply cell (30),
b) when the system (1) operates according to the second mode of operation:
- the first switch (I5) connects the first connection terminal (41) to the second power supply cell (20) and the second switch (I6) connects the first connection terminal (41) to the third power supply cell (30), when all the power supply cells (10, 20, 30) are connected to the connection module (40),
- the first switch (I5) of the connection module connects the second connection terminal (42) to the second power supply cell (20) and the second switch (I6) of the connection module connects the third connection terminal (43) to the third power supply cell (30) when only one power supply cell (10, 20, 30) is connected to the connection module (40).

8. Power supply system (1) according to any one of the preceding claims, comprising three power supply cells (10, 20, 30).

9. Automotive vehicle comprising an electrical power supply bus (DC+, DC-) designed to supply electrical equipment installed in the vehicle and an electrical power supply system (1) according to any one of the preceding claims.
